(19) Europäisches Patentamt

European Patent Office

Office européen des brevets

(11) Publication number: **0 188 114 B1**

(12) **EUROPEAN PATENT SPECIFICATION**

(45) Date of publication of patent specification: **11.09.91**

(51) Int. Cl.⁵: **C08J 9/26**, C08L 27/12, H01M 2/16

(21) Application number: **85309249.2**

(22) Date of filing: **18.12.85**

Divisional application 90112666.4 filed on 18/12/85.

The file contains technical information submitted after the application was filed and not included in this specification

(54) **Microporous films.**

(30) Priority: **19.12.84 GB 8432048**

(43) Date of publication of application:
**23.07.86 Bulletin 86/30**

(45) Publication of the grant of the patent:
**11.09.91 Bulletin 91/37**

(84) Designated Contracting States:
**AT BE CH DE FR GB IT LI NL SE**

(56) References cited:
**GB-A- 682 050**
**GB-A- 1 078 895**
**GB-A- 2 078 604**
**US-A- 4 376 811**
**US-A- 4 401 736**

(73) Proprietor: **SCIMAT LIMITED**
**Lennox House Spa Road**
**Gloucester(GB)**

(72) Inventor: **Park, George Barry**
**30 Restrop View Purton**
**Near Swindon Wiltshire(GB)**
Inventor: **Cook, John Anthony**
**18 Beech Close Orchard Hill**
**Faringdon Oxfordshire(GB)**

(74) Representative: **Cole, Paul Gilbert et al**
**BERESFORD & Co 2-5 Warwick Court High**
**Holborn**
**London WC1R 5DJ(GB)**

## Description

The present invention relates to an electrochemical cell having a separator which is a porous polymer film.

Microporous films are used in a wide range of applications, generally to provide a selective barrier. For example, they may be used as battery separators, and membranes, electrolysis membranes as well as in breathable fabrics and medical and packaging applications. Commonly used polymeric films comprise polyolefins such as polyethylene and polypropylene which can conveniently be made porous by extraction of a soluble component or components (see GB-A-1078895). Such films are chemically inert towards many acids and alkalis and towards many reactive metals. However, there exist a number of solvents with which a polyolefin film cannot be used because of chemical incompatability. Furthermore, the maximum operating temperature of polyolefin films is about 120°C, and their use in cells for high temperature applications is therefore not possible. Cell separators for use where the environment is chemically aggressive or in high temperature cells have therefore been made of glass fibre, but such separators are relatively bulky.

It is therefore an object of the invention to provide an electrochemical cell having a separator that is resistant to chemically aggressive environments at ambient or elevated temperatures but is of relatively low bulk and can be made with micropores.

The present invention provides an electrochemical cell in which the separator is a porous polymeric film which comprises a halopolymer of a particular class defined below. Such cell separators can be suitable for use in cells that operate at ambient or elevated temperatures and are substantially inert to alkali and alkaline earth metals which are chemically aggressive.

In one aspect the invention provides an electrochemical cell which comprises an anode which is a metal of Group I or Group II of the Periodic Table, a cathode, an electrolyte, and a separator positioned between the anode and the cathode which is a film having a porosity of at least 20% by volume and comprising a polymer in which the repeating units are $-(C_nH_{2n})-$ and $-(C_mX_{2m})-$ wherein each X independently represents fluorine or chlorine and the values of n and m are greater than one and less than six.

Preferably the film of which the separator is made comprises a copolymer which comprises ethylene and tetrafluoroethylene as the monomer units, although chloroethylenes and fluorochloroethylenes can also be used as the monomer units. In another form, the film of which the separator is made can comprise a copolymer that comprises longer chain monomer units, for example propylene, butylene and halogenated analogues thereof. Particularly preferred halopolymers for use in the invention are those sold under the Trade Marks TEFZEL (ethylene/ tetrafluoroethylene) and HALAR (ethylene/chlorotrifluoroethylene).

The formation of a porous membrane of an ethylene/tetrafluoroethylene copolymer (TEFZEL) is disclosed in GB-A-2078604, but there is no disclosure that this porous membrane is effective as a separator in a cell where the anode is a metal of Group I or Group II of the Periodic Table. The use of ethylene/tetrafluoroethylene copolymers (TEFZEL) and ethylene/chlorofluoroethylene copolymers on a non-porous jacket on an internal lead of a lithium/thionyl chloride cell to prevent parasitic discharge is disclosed in US-A-4376811, but the cell separator disclosed for use in that cell is of glass fibre.

The term "film" is used to denote a non-fibrous self-supporting sheet. A microporous film, which is preferably used according to the invention, is a porous film in which the details of pore configuration and/or arrangement are discernable only by microscopic examination. Preferably the pores or open cells in the films are smaller than those which can be seen using an optical microscope, in which case electron miscroscopy techniques may be used to resolve details of the pore structure. Generally the maximum dimension of a substantial number of the pores will be less than 5 micrometers, preferably less than 2 micrometers, measured by mercury intrusion porosimetry according to ASTM D 2873-70. The porosity of the films may advantageously be not less than 30%, preferably not less than 40% by volume, for example from 40-50% by volume, measured by mercury intrusion porosimetry, again according to ASTM D 2873-70.

Microporous films of the halopolymers defined above have chemical and physical properties which are advantageous for use in a variety of high performance applications as battery separators. A significant advantage of the microporous film is that it withstands high temperatures, and can be used for example in high temperature electrochemical cells where previously used microporous films cannot function.

The cell separators described above are chemically inert towards reactive metals commonly used as anodes in electrochemical cells, for example metals of Groups I and II of the Periodic Table. This property of the films is surprising in view of the reactivity towards lithium and sodium (at least) of the well known halogenated polymers polyvinylidene fluoride ($PVF_2$) and polytetrafluoroethylene (PTFE).

The cell separator films can also exhibit chemical inertness towards many aggressive liquids found in electrochemical cells and electrolysis cells. Thus the preferred films of the invention are inert towards acids and alkalis, as well as towards reactive fluids such as oxyhalides of elements of Group VA and Group VIA of the Periodic Table (as published in the Condensed Chemical Dictionary, 9th Edition, Van Nostrand Reinhold, 1977), for example thionyl chloride, sulphuryl chloride and phosphoryl chloride. The films can therefore be used in many applications where the use of cumbersome non-woven glass fibre mats has previously been unavoidable, and a significant saving in size and weight may also thereby be obtained. An example of such an application is as a separator in a lithium/thionyl chloride cell.

Polymeric films for use as cell separators as aforesaid may be made by a method which comprises providing a film of a polymer composition comprising:

(a) a halopolymer in which the repeat units are $-(C_n H_{2n})-$ and $-(C_m X_{2m})-$, where each X independently represents fluorine or chlorine and the values of n and m are greater than one and less than six;

(b) at least one extractable component which is substantially insoluble in the halopolymer;

and subsequently extracting at least some of the extractable component so as to render the film microporous with a porosity of not less than 20%.

The method enables microporous films of halopolymers to be made conveniently. By careful selection of the extractable components, a porosity of not less than 30% by volume, for example not less than 40% can be achieved. Preferably the polymer composition comprises an extractable salt and an extractable polymer. The extractable salt may be present in an amount of from 10 to 150 parts per 100 parts of the halopolymer, preferably from 50 to 120 parts, especially from 95 to 105 parts. The extractable polymer may be present in an amount of not more than 60 parts per 100 parts of the halopolymer, preferably from 5 to 30 parts, especially from 20 to 25 parts. The proportions of the components of the composition may be varied, depending on such factors as the desired porosity of the film, the desired porosity profile through the thickness of the film, the size of the pores, the nature and chemical compatibilities of the components.

A high porosity can be achieved using a combination of extractable polymer and salt, and although the reasons for this are not fully understood, it would appear that the extractable polymer makes easier the extraction of the salt from the halopolymer matrix, possibly by acting as a wetting agent. Furthermore, as shown by scanning electron micrographs of a film produced by the preferred method, the presence of the extractable polymer appears to increase the surface porosity of the film compared with the porosity of films prepared by extraction of a salt alone, in which latter films the surface porosity limits performance significantly.

Preferably the method includes the step of deforming the film so as to reduce its thickness prior to extraction of the extractable component. The film may be deformed by up to 25%, up to 50%, up to 85% or by more, depending on for example the dimensions of the film, the desired nature of the pores, the nature of the halopolymer and the extractable components. The deformation is preferably carried out using rollers, for example nip rollers in line with an extrusion die, although other techniques including stretching of the film may also be used. Deformation of the film can increase the efficiency of the extraction step and can also affect the nature of the pores; for example passing the film though nip rollers can affect the tortuosity of the pores.

For some applications, it will be acceptable for some of the extractable polymer or the salt or both to remain in the halopolymer matrix after extraction. Generally however, it is preferred that substantially all of the polymer and salt are extracted from the matrix, since the porosity is thereby maximised.

It is particularly preferred that the extractable polymer and the salt are selected to be soluble in one solvent. This makes more convenient the extraction of polymer and salt since significantly fewer extractions need be performed. For convenience, the polymer and salt will be selected to be soluble in an aqueous solvent, such as water or an aqueous acid solution. Other solvents may, however, be selected. In some applications, the extracting solvent may be a liquid with which the film comes into contact when in use, such as for example the electrolyte of an electrochemical cell.

The extractable polymer is selected to have a solubility in the extracting solvent that is significantly higher than the solubility of the halopolymer. When water or another aqueous based solvent is selected as the solvent, the extractable polymer may be selected from the following list (which is not exhaustive):

- alkylene oxide homo- and copolymers.
- vinyl alcohol homo- and copolymers.
- vinyl pyrrolidone homo- and copolymers.
- acrylic acid homo- and copolymers.
- methacrylic acid homo- and copolymers.

Certain naturally occurring polymers such as polysaccharides may also be used as the extractable polymer component in certain applications.

Particularly preferred materials are ethylene oxide polymers, such as that sold under the Trade Mark Polyox. The use of ethylene oxide polymers as the extractable polymer is advantageous since they are water soluble and melt-processable.

EP 0 188 114 B1

The extractable salt should be selected according to the end use of the porous film, since at least a small amount of the salt is likely to remain in the film after extraction, and any remaining salt must be chemically compatible with other materials with which the film comes into contact when in use. For example, if the film is to be used as a separator in an electrochemical cell which has a reactive metal anode, the extractable salt should be electrochemically compatible with other cell components. Thus the salt should be of a metal which is at least as electropositive as the metal of the anode; for example when the film is to be used as a separator in a lithium cell, the salt should be a lithium salt; preferred lithium salts include the carbonate, chloride, phosphate and aluminate, although other lithium salts may be used including the nitrate, sulphate, trifluoromethylsulphonate and tetrafluoroborate.

It will be understood that in some circumstances, it will be appropriate to add other components to the polymer composition such as antioxidants, UV stabilisers, processing aids, dispersal aids, cross-linking agents, prorads and/or antirads.

The components of the film may be blended using conventional polymer blending apparatus such as a twin-screw extruder or a two-roll mill. The film is preferably formed as a thin strip of sheet, and it may be made in this form by a melt processing technique, for example by extrusion, although blow and compression moulding techniques are examples of alternative techniques which may be used. Melt processing techniques are preferred since they allow films to be made with consistent properties and permit the production of thin films. Furthermore, melt processing techniques allow a film to be made continuously. The film may be extruded onto, or coextruded with, another component with which it will be in contact when in use. Once formed, the film may be cut into pieces of suitable size, or it may be formed into a roll, for ease of transportation and storage.

It is particularly surprising that the defined halopolymers can be blended with the preferred extractable polymers mentioned above using melt processing techniques, in view of the wide difference between the melting points of the two classes of materials. In some cases, care may be necessary in selecting quantities and mixing conditions to avoid degradation of the extractable polymer and halopolymer.

For certain applications, it may be advantageous to cross-link the polymer of the film. This may be effected by irradiation, for example by electrons, gamma radiation, or by use of a chemical cross-linking agent.

The chosen final thickness of the film is dependent on the end use, and factors such as the desired strength, flexibility, barrier properties and so on will generally have to be considered. The materials of the film may be produced to a thickness of less than 75 micrometres, preferably less than 50 micrometres. Most preferred films for use as a battery separator have a thickness of less than 35 micrometres, for example between 20 and 30 micrometres.

An electrode separator suitable for use in an electrochemical cell which comprises a reactive metal anode, may be made by a further method which comprises extruding onto, or coextruding with, another component of the cell a film of a polymer composition which comprises a halopolymer in which the repeat units are $-(C_n H_{2n})-$ and $-(C_m X_{2m})-$, where each X independently represents fluorine or chlorine, and the values of n and m are greater than one and less than six. Preferably the extruded film will contain an extractable component which can be extracted.

The microporous film may be used to protect sensitive material for greater convenience during handling. For example it may be used to protect sensitive electrode material such as reactive metal anodes, for example lithium anodes, as disclosed in EP-A-143562.

Example 1

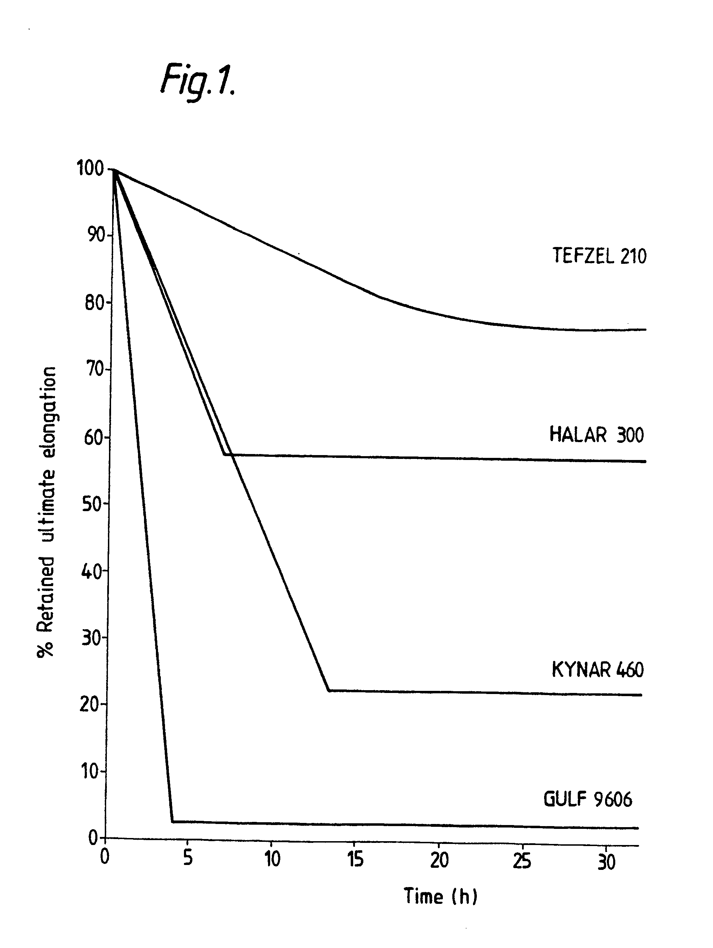

Non-porous samples of ethylene/tetrafluoroethylene copolymer (Tefzel 210), ethylene/chlorotrifluoroethylene copolymer (Halar 300), polyvinylidene fluoride (Kynar 460 - Trade Mark) and polyethylene (Gulf 9606 Trade Mark) were maintained in a 1.9 M solution of $LiAlCl_4$ in $SOCl_2$ under reflux, and the effect on the ultimate elongation of the samples was monitored. The results are shown in Figure 1, expressed in terms of the percentage of the initial ultimate elongation which was retained after the exposures. The measurements were made at room temperature.

Samples of Tefzel 210 and Halar 300 were also maintained in a 1.9 M solution of $LiAlCl_4$ in thionyl chloride ($SOCl_2$) at room temperature. The effect of the treatment on the mechanical properties of the samples is shown in Table 1, the results being expressed as in Figure 1.

Table 1:

(a) 8 weeks at room temperature:

4

|  | %Retained Tensile Strength | %Retained Ult. Elongation |
|---|---|---|
| Tefzel 210 | 88 | 92 |
| Halar 300 | 75 | 93 |

(b) 32 hours under reflux at 85° C:

|  | %Retained Tensile Strength | % Retained Ult. Elongation |
|---|---|---|
| Tefzel 210 | 90 | 77 |
| Halar 300 | 61 | 57 |

Example 2

The stability of polytetrafluoroethylene (Zitex G110 - Trade Mark), Kynar 460, Halar 300 and Tefzel 210 towards lithium metal was evaluated at elevated temperature. Samples of the four polymeric materials were dried by placing them in a vacuum oven at 150° C for 8 hours. The samples were then maintained in contact under pressure with lithium in a dry environment at 85° C for 16 days. The following results were obtained on inspection:

Tefzel 210:     No change in the appearance of lithium or of Tefzel.

Halar 300:     Lithium blackened over approximately 80% of the surface which contacted the polymer sample.

Kynar 460:     Lithium blackened over approximately 95% of the surface which contacted the polymer sample.

Zitex G110:     Lithium blackened over the entire surface which contacted the polymer sample, and bonded weakly to the sample.

Example 3

Ethylene/tetrafluoroethylene copolymer (Tefzel 210), lithium carbonate and polyethylene oxide (Polyox WSR 301 - Trade Mark) were compounded using a Baker Perkins twin screw extruder to give a blend containing 100 parts Tefzel, 100 parts lithium carbonate and 22 parts Polyox. The compound was further extruded using a Leistritz single screw extruder to produce a film of thickness 0.2 mm which was rolled using rollers at a temperature in the range 140-220° C to produce film having a thickness of approximately 27 micrometres. This thinned film was then treated with concentrated HCl at room temperature (c. 23° C) to remove the lithium carbonate and Polyox leaving a microporous web of Tefzel. The excess acid and reaction products were removed by washing with distilled water prior to drying of the film. The porosity of the resulting film, determined according to ASTM D2873-70, was found to be 45%.

Example 4:

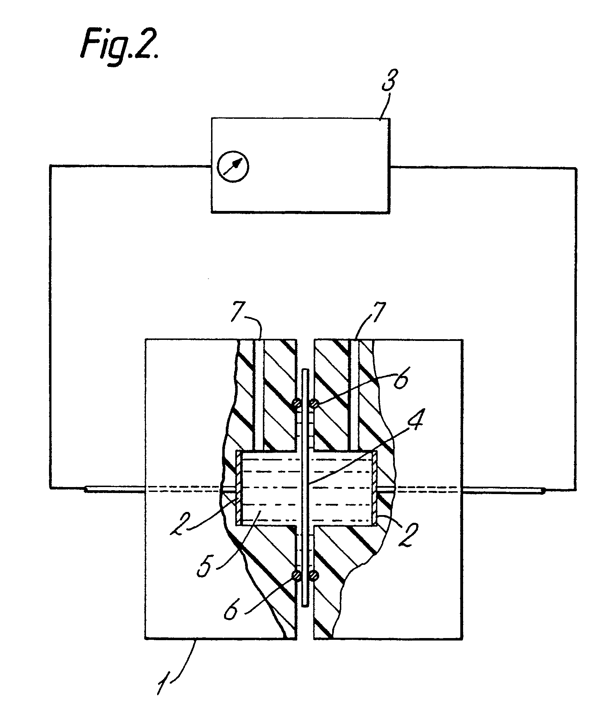

The electrical resistance of a porous Tefzel film, prepared by the method described in Example 3, was measured in three different electrolytes using a test cell as shown in Figure 2 of the accompanying drawings. As shown in Figure 2, the cell comprises a container 1 incorporating electrodes 2 of stainless steel connected to a conductance bridge 3. A sample 4 to be tested is sealed into the test chamber 5 by sealing gaskets 6, and the necessary conductive liquid is introduced via feed ports 7.

The results are given in Table 3:

Table 3:

| Electrolyte | Resistance at 30°C (ohm cm$^2$) |
|---|---|
| 1.9 Molar LiAlCl$_4$ in SOCl$_2$ | 4 |
| 1.0 Molar LiClO$_4$ in 50/50 Propylene carbonate 1,2-dimethyoxyethane | 7 |
| 30% ww KOH in water | 0.45 |

Example 5:

Tefzel 210 and lithium chloride in the ratio 40:60 were blended using a Leistritz twin screw extruder. The resulting blend was then re-extruded to produce a web having a width 40 cm and thickness 0.5 mm. The thickness of the web was then reduced to 0.15 mm by passing it through the nips of a calendar roller stack. The web was soaked in water to leach out the lithium chloride, and then dried thoroughly. The porosity of the film was found to be 48% by volume.

The film was used as a separator in a test cell as described above, in which the electrolyte was 1.9 M LiAlCl$_4$ in SOCl$_2$. The resistance of the film was measured using a conductivity bridge, and found to be 161 ohm cm$^2$ at room temperature.

## Claims

1. An electrochemical cell which comprises an anode which is a metal of Group I or Group II of the periodic table, a cathode, an electrolyte, and a separator positioned between the anode and the cathode which is a film having a porosity of at least 20% by volume and comprising a polymer in which the repeating units are -(C$_n$H$_{2n}$)- and -(C$_m$X$_{2m}$)- wherein each X independently represents fluorine or chlorine and the values of n and m are greater than one and less than six.

2. An electrochemical cell according to Claim 1, wherein the anode comprises lithium.

3. An electrochemical cell according to Claim 2, wherein the electrolyte comprises an oxyhalide of an element of group VA or VIA.

4. An electrochemical cell according to Claim 3, wherein the electrolyte comprises thionyl chloride, sulfuryl chloride or phosphoryl chloride.

5. An electrochemical cell as claimed in any preceding claim, wherein the halopolymer is an ethylene/chlorotrifluoroethylene copolymer.

6. An electrochemical cell as claimed in any preceding claim, wherein the halopolymer is an ethylene/tetrafluoroethylene copolymer.

7. A method of using a electrochemical cell as claimed in any preceding claim which comprises operating the cell at an elevated operating temperature.

**Revendications**

1.  Une cellule électrochimique comprenant une anode qui est un métal du groupe I ou du groupe II de la classification périodique des éléments, une cathode, un électrolyte et un séparateur placé entre l'anode et la cathode, qui est une pellicule ayant une porosité d'au moins 20% en volume et étant constituée par un polymère dans lequel les unités répétitives sont $-(C_nH_{2n})$ et $-(C_mX_{2m})-$ où chaque X représente, indépendamment, du fluor ou du chlore et les valeurs de n et m sont supérieures à un et inférieures à six.

2.  Une cellule électrochimique selon la revendication 1, dans laquelle l'anode est constituée par du lithium.

3.  Une cellule électrochimique selon la revendication 2, dans laquelle l'électrolyte est constitué par un oxyhalogénure d'un élément du groupe VA ou VIA.

4.  Une cellule électrochimique selon la revendication 3, dans laquelle l'électrolyte est constitué par du chlorure de thionyle, du chlorure de sulfuryle ou du chlorure de phosphoryle.

5.  Une cellule électrochimique selon l'une des revendications précédentes, dans laquelle le polymère halogéné est un copolymère éthylène/chlorotrifluoroéthylène.

6.  Une cellule électrochimique selon l'une des revendications précédentes, dans laquelle le polymère halogéné est un copolymère éthylène/tétrafluoroéthylène.

7.  Un procédé d'utilisation d'une cellule électrochimique selon l'une des revendications précédentes, qui consiste à faire fonctionner la cellule à une température de travail élevée.

**Patentansprüche**

1.  Elektrochemische Zelle, enthaltend eine Anode aus einem Metall der Gruppen I oder II des Periodensystems, eine Kathode, einen Elektrolyten und einen Separator, der zwischen der Anode und der Kathode angeordnet ist, und der ein Film mit einer Porosität von wenigstens 20 Vol.-% ist und der ein Polymer enthält, in dem die sich wiederholenden Einheiten $-(C_nH_{2n})-$ und $-(C_mX_{2m})-$ sind, wobei X jeweils unabhängig voneinander Fluor oder Chlor bedeutet und die Werte n und m größer als 1 und kleiner als 6 sind.

2.  Elektrochemische Zelle nach Anspruch 1, in der die Anode Lithium enthält.

3.  Elektrochemische Zelle nach Anspruch 2, in der der Elektrolyt ein Oxidhalogenid eines Elements der Gruppen VA oder VIA enthält.

4.  Elektrochemische Zelle nach Anspruch 3, in der der Elektrolyt Thionylchlorid, Sulfurylchlorid oder Phosphorylchlorid enthält.

5.  Elektrochemische Zelle nach einem der vorhergehenden Ansprüche, wobei das Halogenpolymer ein Ethylen/Chlortrifluorethylen-Copolymer ist.

6.  Elektrochemische Zelle nach einem der vorhergehenden Ansprüche, wobei das Halogenpolymer ein Ethylen/Tetrafluorethylen-Copolymer ist.

7.  Verfahren zur Verwendung einer elektrochemischen Zelle nach einem der vorhergehenden Ansprüche, das das Betreiben der Zelle bei erhöhter Betriebstemperatur umfaßt.

*Fig.1.*

Fig.2.